# EUROPEAN PATENT SPECIFICATION

(11) **EP 3 253 828 B1**
(45) Date of publication and mention of the grant of the patent: **18.12.2019**
(21) Application number: 16704154.0
(22) Date of filing: 04.02.2016
(51) Int. Cl.: C09D 5/00, C09D 201/00, B32B 27/00

(54) **METHOD FOR PROVIDING A THERMOSET COATING WITH A SURFACE PATTERN AND/OR TEXTURE**
VERFAHREN ZUR BEREITSTELLUNG EINER WÄRMEHÄRTENDEN BESCHICHTUNG MIT EINEM OBERFLÄCHENMUSTER UND/ODER TEXTUR
PROCÉDÉ PERMETTANT DE FOURNIR UN REVÊTEMENT THERMODURCI AVEC UN MOTIF DE SURFACE ET/OU UNE TEXTURE

(30) Priority: 06.02.2015 EP 15020019
(43) Date of publication of application: 13.12.2017
(73) Proprietor: Tata Steel UK Ltd., London SW1P 4WY (GB)
(72) Inventor: BARKER, Peter, 1970 CA IJmuiden (NL); ROUSSEAU, Joel, Michel, Robert, Maurice, 1970 CA IJmuiden (NL)
(74) Representative: Group Intellectual Property Services
(86) International application number: PCT/EP2016/052390
(87) International publication number: WO 2016/124691

(56) References cited:
- DATABASE WPI Week 200382 Thomson Scientific, London, GB; AN 2003-882350 XP002741552, & JP 2003 181981 A (DENKI KAGAKU KOGYO KK) 3 July 2003 (2003-07-03)
- DATABASE WPI Week 197629 Thomson Scientific, London, GB; AN 1976-55046X XP002741553, & JP S51 63834 A (NITTO ELECTRIC IND CO) 2 June 1976 (1976-06-02)

## Description

The present invention relates to a method for providing a thermoset coating layer with a surface pattern and/or texture and to the coated metal substrate thus produced.

Coil coating is a continuous process in which one or more layers of a coating material are applied on a rolled metal strip such as steel or aluminium. Typically the coiled metal strip is unwound, cleaned and then provided with a pre-treatment layer and a primer and, depending on the end application, one or more organic coating layers are provided on the pre-treatment layer. For building and construction applications, a top coat made of a thermoset resin is typically provided on the pre-treatment layer for the purpose of inhibiting corrosion and for providing colour and gloss to the finished product. However, it is difficult to provide thermoset top coats with a surface pattern or texture because thermoset top coats are generally thin and are easily damaged during the treatment for providing the surface pattern or texture, Although the thickness of a top coat may be increased to a thickness that would enable surface patterning or texturing, the cost providing thicker top coats is prohibitive. Top coats based on thermoplastic polymers are known, and because they are more pliable when heated, they may be used instead of thermoset top coats if a specific surface pattern and/or texture is desired. However, thermoplastic top coats suffer from the disadvantage that they often exhibit poor UV stability and therefore, when exposed to the natural environment, the mechanical integrity and/or surface appearance of products comprising thermoplastic top coats may be significantly reduced relative to products that are provided with thermoset top coats.

JP 2003 181981 A discloses a fluorine resin film coated metal plate including a formation treatment layer, a thermoset adhesive layer, a fluorine resin film layer and a printing ink layer formed partially on the surface of the fluorine resin film layer.

It is an object of the present invention to provide a surface pattern and/or texture on a coating that exhibits good UV stability,

It is a further object of the present invention to retain the corrosion protective properties of a coating following a treatment for providing the coating with a surface pattern or texture.

It is another object of the invention to provide a surface pattern and/or surface texture on a top coat comprising a thermoset material.

One or more of the above objects are satisfied by the present invention, which according to a first aspect relates to a method for providing a thermoset coating layer with a surface pattern and/or texture, which comprises the steps of:
- providing a metal substrate;
- providing a pre-treatment primer or a pre-treatment layer and a primer on the metal substrate;
- applying a layer of a thermoplastic material on the pre-treatment primer or primer,
- applying a top coat comprising a thermosetting material on the thermoplastic layer and curing the thermosetting material, and
- subjecting the coated metal substrate to a treatment for providing the top coat with a surface pattern and/or texture, wherein the top coat is provided with the surface pattern and/or texture at a temperature of the coated metal substrate above the onset softening temperature of the thermoplastic material.

By providing the thermoplastic layer between the pre-treatment primer or the primer and the top coat, the inventors found that it was possible to provide the top coat comprising the thermoset material with a surface pattern and/or texture without damaging the top coat. It is understood that when the top coat is heated and cured, the thermoplastic layer imparts plasticity to the top coat, meaning that the top coat is not damaged, or damaged to a lesser extent, when subjected to the treatment for providing the surface pattern and/or texture. Since the top coat comprises a thermoset material, the top coat exhibits good UV stability, which has the effect of maintaining the mechanical integrity and the surface appearance of the top coat over a longer period of time relative to a top coat that consists of a thermoplastic material only.

If one uses a thermoplastic material whose thermoplastic resin is dispersed amongst other chemical element by a solvent, then it will be necessary to heat the strip coated with the thermoplastic material to a temperature above the fusing point of the thermoplastic material to both evaporate the solvent and form a homogeneous film after being quenched. On the other hand if the layer of thermoplastic material is applied via solvent-less techniques, such as extrusion coating, the coated substrate may not require to be heated after application but heat would have been required to melt the thermoplastic prior or during application process.

The purpose of the pre-treatment primer is to protect the metal substrate from corrosion and to improve the adhesion between the metal substrate and a subsequently applied layer such as the thermoplastic layer. Similarly, the primer is provided for the purpose of improving adhesion between the pre-treatment layer and a subsequently applied coating layer. However, relative to the pre-treatment primer, the contribution of the primer to protecting the metal substrate from corrosion is reduced. When a primer is used, it is therefore preferable to provide the primer on a corrosion protective pre-treatment layer, preferably a chromium-free pre-treatment layer. The use of pre-treatment primer is most preferred since fewer processing steps are required in order to obtain the desired adhesion and corrosion protective properties.

According to a further aspect of the invention the top coat is provided with a surface pattern and/or texture at a temperature of the coated metal substrate that is above the onset softening temperature of the thermoplastic material.

In a preferred embodiment the coated metal substrate is provided with a surface pattern and/or texture to a metal temperature between 10 °C and 70 °C above the onset softening temperature of the thermoplastic material. It was found that embossing at a metal temperature between 10 °C and 70 °C above the onset softening temperature of the thermoplastic material was optimal for obtaining patterned and/or textured top coats having a good surface finish and well-defined surface patterns.

After applying the thermosetting material and depending on the temperature at which the thermosetting material has been cured the following conditions may arise:
- the curing temperature of the thermosetting material is such that the temperature of the metal substrate at the stage of providing a surface pattern and/or texture is within the desired temperature range for that operation, or
- the curing temperature of the thermosetting material is such that the temperature of the metal substrate at the stage of providing a surface pattern and/or texture is above the desired temperature range for that operation, in which case a cooling step is required, or
- the curing temperature of the thermosetting material is such that the temperature of the metal substrate at the stage of providing a surface pattern and/or texture is below the desired temperature range for that operation, in which case a heating step is required.

Also possible is to first cool down the coated metal substrate to a temperature below the onset softening temperature of the thermoplastic material, for instance to room temperature, after which the coated metal substrate is heated to a temperature within the desired temperature range for providing a surface pattern and/or texture. This allows to separate the coating steps from the step of providing a surface pattern and/or texture both in time and place.

However, in a preferred embodiment the coated metal substrate is cooled down at the end of the curing oven or maintained at a temperature within the preferred temperature range for providing a surface pattern and/or texture. This has the effect that the patterned and/or textured top coat exhibits an improved surface appearance relative to top coats that were cooled to a temperature below the onset softening temperature of the thermoplastic material and then re-heated before the step of providing the surface pattern and/or texture. In addition, by maintaining or cooling the coated metal substrate to a temperature above the onset softening temperature of the thermoplastic material, well-defined and crisp surface patterns are obtained.

Determination of the onset softening temperature of a thermoplastic material is a standard method within the field of thermomechanical analysis (TMA). The method is a penetration test which results in a thermal curve showing penetration depth against a fixed temperature increase per unit of time. The onset softening temperature is determined from the trend of the thermal curve.

In a preferred embodiment the top coat comprises a thermoplastic material. By providing a top coat that comprises a thermoset material and a thermoplastic material, the plasticity of the top coat is improved to an extent that it is easier to provide the top coat with a surface pattern and/or texture. However, the thermoplastic material should not be provided in amount that would significantly reduce the UV stability of the top coat and the long term mechanical and aesthetic performance of the coated metal substrate.

In a preferred embodiment the top coat comprises two or more layers, preferably between 2 and 10, more preferably between 2-5 layers. By providing a top coat comprising two or more layers, the physical properties and aesthetic appearance of the coated metal substrate can be tailored to suit a particular application. For instance, a top coat comprising multiple layers may be provided to improve corrosion resistance or abrasion resistance. Similarly, a top coat comprising multiple layers may be provided in order to obtain a specific aesthetic appearance, which would otherwise not be possible due to processing and compositional constraints. When a top coat comprising two or more layers is provided, it is preferred that the layer adjacent to the thermoplastic layer comprises a thermoset material and a thermoplastic material since this results in a patterned and/or textured top coat having an improved surface finish.

In a preferred embodiment the thermosetting material is designed to be fully cured at a peak metal temperature between 20°C and 80°C above the onset softening temperature of the thermoplastic material in order to soften thermoplastic material without risk of degrading the thermoplastic layer or any of the previously applied layers. The peak metal temperature is the highest temperature that the substrate will reach in the curing oven.

In a preferred embodiment the treatment for providing the top coat with a surface pattern and/or texture is a mechanical treatment, preferably embossing. Embossing is particularly preferred as a method for providing the surface pattern and/or texture since the embossing apparatus can be easily incorporated into a coil coating line at the end of the line. Moreover, the use of conventional embossing, rather than stucco embossing, prevents the coated metal substrate from being damaged during the embossing operation. The use of embossing to provide the surface pattern or texture is also preferred because the surface pattern or texture can be provided inexpensively and in a short period of time.

In a preferred embodiment the thermoplastic material comprises plastisols, organosols, polyolefins or ionomers. In addition to conventional polyvinyl chloride (PVC) based plastisols and organosols, non-PVC based plastisol and organosol materials may be used to form the thermoplastic layer. Thermoplastic layers comprising one or more of the aforementioned thermoplastic materials, exhibit very good barrier properties. Moreover, these thermoplastic materials are relatively inexpensive and are easily malleable.

According to a further aspect the thermoplastic materials used in the method have an onset softening temperature greater than 90°C, more preferably greater than 120°C. The limit of onset softening temperature ensures that the embossed product will have a stable pattern even when used in high temperature environments.

In a preferred embodiment the thermosetting material comprises polyurethanes, polyesters, polyimides, epoxies, acrylic and acrylate or fluoroethylene vinyl ethers. These thermosetting materials are preferred since they exhibit good to UV stability.

In a particularly preferred embodiment the thermoplastic layer comprises plastisols and the top coat comprises a polyurethane thermosetting material. Such a coating system is particularly suitable for embossing and exhibits good corrosion resistance and UV stability.

In a preferred embodiment the dry film thickness of the primer or pre-treatment primer is less than 25 µm, preferably between 5 and 15 µm. The dry film thickness of the pre-treatment primer or primer should be less than 25 µm otherwise blisters may form in the pre-treatment primer or primer when the thermoplastic layer is heated, thereby adversely affecting the adhesion and surface appearance of the pre-treatment primer or primer.

Preferably the dry film thickness of the pre-treatment primer or primer is at least 5 µm, since below this lower limit a reduction in the corrosion resistance is obtained. A pre-treatment primer or primer having a dry film thickness between 5 and 15 µm is preferred since good corrosion resistance and adhesion is obtained.

In a preferred embodiment the dry film thickness of the thermoplastic layer is between 50 and 250 µm, preferably between 150 and 220 µm. The dry film thickness of the thermoplastic layer should be at least 50 µm otherwise the plasticising effect of the thermoplastic layer on the top coat containing the thermosetting material is reduced to an extent that it becomes difficult to provide the top coat with a surface pattern and/or texture. In addition, the dry film thickness of the thermoplastic layer should be at least 50 µm so that the metal substrate is adequately protected from corrosion following surface patterning or texturing treatment, e.g. embossing. It is preferred to limit the thickness of the thermoplastic layer to 250 µm or less from a cost perspective. A dry film thickness between 150 µm and 220 µm is particularly preferred since a thermoplastic layer thickness within this range provides good corrosion protection to the metal substrate. In addition, when embossing is used to provide the surface pattern or texture, the clarity of the surface pattern or texture that is obtained after embossing is improved when the thermoplastic layer thickness is between 150 µm and 220 µm.

In a preferred embodiment the dry film thickness of the top coat is between 10 and 60 µm, preferably between 20 and 30 µm. When the dry film thickness is below 10 µm and the surface pattern or texture is provided by embossing, this could result in tearing of the top coat. Moreover, in the case of clear top coats, a dry film thickness below 10 µm was insufficient for preventing UV light from passing through the top coat._For pigmented top coats, a dry film thickness between 10 and 30 µm is preferred since the desired product colour may be obtained without having to modify the type and content of pigments in one or more of the previously applied layers. In addition, it is preferred to limit the dry film thickness of the top coat to no more than 30 µm from a cost perspective.

In a preferred embodiment the metal substrate comprises aluminium, stainless steel or steel, preferably the steel substrate is provided with a zinc or zinc alloy coating. Preferably the zinc alloy comprises Zn as the main constituent, i.e. the alloy comprises more than 50% zinc, and one or more of Mg, Al, Si, Mn, Cu, Fe and Cr. Zinc alloys selected from the group consisting of Zn-Mg, Zn-Mn, Zn-Fe, Zn-Al, Zn-Cu, Zn-Cr, Zn-Mg-Al and Zn-Mg-Al-Si are preferred and afford additional corrosion protection to the underlying steel substrate. Such coatings may be applied by hot-dip galvanising, electro-galvanising, galvannealing or by physical vapour deposition (PVD).

In a preferred embodiment the coated metal substrate is produced by coil coating in a coil coating line. The metallic substrate can be passed through a coil coating line several times to undertake the various key steps required to produce the embossed product.

In a preferred embodiment the coil coating line has a speed between 50 and 250 m/min. The method of the present invention can be carried out continuously on an industrial scale and at high line speeds between 50 and 250 m/min. In this instance, all the key steps from providing the metal substrate to the embossed product would be done in a single coil coating line.

According to a second aspect, the invention relates to a coated metal substrate that comprises:
- a metal substrate;
- a pre-treatment primer or pre-treatment layer and a primer on the metal substrate;
- a thermoplastic layer provided on the pre-treatment primer or primer, and
- a top coat comprising a thermoset material, wherein the top coat comprises a surface pattern and/or texture.

The embodiments and advantages disclosed hereinabove relating to the first aspect of the invention, similarly apply to the coated metal substrate according to the second aspect of the invention.

The invention will now be elucidated by referring to the non-limitative examples below.

### Example 1 (Laboratory embossing study 1)

Line produced samples from an unembossed plastisol coil were used. This 0.675mm gauge Galvalloy substrate was precleaned, a Cr-free pretreatment was applied, a 7 microns Cr free primer (CP71-0103 supplied by BASF) and subsequently a 200 microns commercial grey PVC plastisol (supplied by BASF) was applied and fused at 200°C and quenched.

In the laboratory, a smooth Polyurethane solvented coating (clover green) used for external application (supplied by BASF-reference CD965970002 Polyceram U clover) was applied via bar coating in the laboratory onto this precoated substrate. The applied dry thickness was measured to be around 20microns.

Before bringing the sample with the wet paint into the oven, a calibrated thermocouple was placed at the back of the panel with a thermal tape, in order to accurately measure the peak metal temperature (PMT).

The material was cured in a Mathis oven up to a PMT of 223°C which is the advised curing temperature for the polyurethane coating. After the cured panels did automatically exit the oven, it was left onto the oven tray for an amount of time to achieve a certain temperature (measured by the same thermocouple), see Table 1.

At the desired temperature, the sample was put onto a laboratory embosser. This laboratory embosser has a backing rubber roll that is motor driven and the embosser roll that is not driven. The embosser had two different patterns on the same roll. A short time (10-15s) before putting the sample in the embosser, a pneumatic pressure (70Psi) is applied to have the embosser roll pressed against the motor driven rubber roll.

Shortly before putting the panel into the embosser the strip temperature was measured again after which the thermocouple was removed from the back of the panel. Therefore the drop in temperature of the thermocouple was a good indication of the strip temperature at which the material was hitting the embosser.
After embossing the sample at a speed of 20m/min, the sample plunged in a cooled water bath in order to be quenched.

he embossed samples were then visually evaluated for the quality of the emboss and potential defects (direct evaluation and with x10 magnifying glass). Embossing quality was also evaluated by measuring the volume of the emboss replica that was impressed onto the coated sample and comparing it with the volume of the original emboss image on the embosser roll. The emboss replica volume was determined with the help of a surface finish measurement tool from Taylor-Hobson, the Form Talysurf, Series 2. The Talysurf analysis was done over a single emboss feature at a resolution of 20µm. The form of the surfaces was then calculated by regression of a 6^{th} order polynomial function and subsequently the volume of the emboss replica was calculated.

The typical volume of the large emboss replica is 80.50 x10⁶ µm³. The typical volume of the small emboss replica is 45.80 x10⁶ µm³.

Table 1 shows the outcome from the visual inspection of the panels, wherein the Talysurf analysis percentages give the ratio between the emboss replica and the original emboss.

The onset softening temperature was evaluated by means of Thermomechanical Analysis (TMA) using a thermomechanical analyzer of TA Instruments, the TMA Q400. The Q400 is a much used thermomechanical analyzer in the industry which can be used for a number of different tests including softening point measurements.

For the determination of the onset softening temperature the TMA Q400 is run in penetration mode, with a penetration probe for softening point measurements in solids, under nitrogen atmosphere, with a 5°C/min temperature ramp and a constant force of 0.1N.

The thermal curve in Fig.1 represents two scans of the same PVC plastisol in a laboratory setup from room temperature to about 220°C. The final steep part of the curve represents the softening of the plastisol. The onset softening temperature is the temperature that corresponds with the intersection point of a tangential line to the last steep part of the curve and a tangential line to the previous part of the curve as presented in figure 1. For the present PVC Plastisol used in the experiments the onset softening temperature showed to be around 145-150°C.

**Table 1**

| PMT embossing temperature (°C) | Visual inspection | | Talysurf analysis (%) | |
|---|---|---|---|---|
| | Small emboss | Large emboss | Small emboss | Large emboss |
| 140.3 | Low | Low | 21 | 9 |
| 148.0 | Low | Low | 23 | 22 |
| 159.3 | Good | Good | 37 | 52 |
| 167.0 | Excellent | Excellent | 34 | 62 |
| 176.0 | Excellent | Excellent | 59 | 69 |
| 191.0 | Good | Good | 46 | 76 |

### Example 2 (Line trial):

A line trial using a Cr free unembossed plastisol coated coil as an entry coil was conducted on a conventional continuous 2-coat coil coating line.
This 0.675mm Galvalloy Cr free un-embossed plastisol coil was previously precleaned, a Cr-free pretreatment was applied, a 7 microns Cr free primer (CP71-103 supplied by BASF) and a 200microns commercial grey plastisol (supplied by BASF) was applied and fused at 200°C Peak Metal Temperature (PMT). During the production trial, the coil went through the coil coating line, with the cleaning, rinsing and pretreatment section switched off and a Polyurethane coating (CQ140202 Polyceram U clover) was applied via 2-roll roller coating in the first coating section and cured at the required minimum 223°C PMT and quenched.

The quenched coated substrate was put through the second oven to reheat. The reheating temperature of the second oven could be varied by varying the line speed in a range from 45 m/min to 70m/min.

Subsequently the coated substrate was embossed using a standard emboss after which the coated substrate was quenched. The quality of the emboss replica obtained on the various reheating temperatures was then visually inspected, see table 2:

**Table 2**

| Strip temperature prior temperature (°C) | Visual inspection |
|---|---|
| 153 | No emboss observed |
| 160 | Light emboss |
| 168 | Good Emboss |
| 176 | Good Emboss |
| 180 | Goodqualityembossbutstartof surface creasing |

### Example 3 (Laboratory evaluation number 2):

Evaluation of alternative thermoplastics coating, a clear Polyvinyl Butyral (PVB) and polyolefin coating were evaluated in similar manner to example 1. The clear PVB coating was formulated by weight using 15.5% weight of PVB in Ethanol. The PVB was slowly mixed into the Ethanol within a fume cupboard and stored within an airtight paint can.

In the laboratory, the PVB coating was applied via draw bars to standard Q panels in two successive layers and air dried for 24h. The overall Dry Film Thickness (DFT) was measured for each sample and were between 60µm and 70µm. A quick adhesion test was carried out to ascertain if the layers had adhered to each other and it was deemed that this was so as no loss of adhesion was observed when a dart was cut into the coating using a sharp knife.

A polyolefin coating from Plascoat (NG30) was applied via powder coating using an air pressure of 2 bar and applied to standard Q panels. In order to obtain a homogeneous Dry Film Thickness (DFT), each Q panel was attached to a block of steel in order to improve its thermal mass and heated prior to application with a conventional oven at 240°C. DFT measurements were made for each panel and the DFT's were in the range from 197µm to 215µm..

After application and curing of the Polyurethane (PU)Clover coating as per example 1 to the desired curing temperature, the PVB and Polyolefin panels were allowed to cool down before supplying them to the lab embosser. The visual embossing is presented in Table 3.

As a reference, the same polyurethane coating as in Example 1 (BASF-reference CD965970002 Polyceram U clover) was applied on top of a line produced PU primed coating (25microns of primer) usually used to produce for outdoor PU coating (25µm PU primer and 25µm PU topcoat).

The embossing results for a range of embossing temperature are evaluated and presented in Table 3. It clearly shows that standard PU only coating can not be embossed but coating with an intermediate layer can be embossed with the temperature range suitable for embossing being highly dependant of the thermoplastic coating.

**Table 3**

| | PVB coating + PU topcoat | PU coating + PU topcoat | Plascoat NG30 + PU topcoat |
|---|---|---|---|
| Embossing Temperature 150°C | Light emboss | No emboss observed | Good quality emboss |
| Embossing Temperature 170°C | Excellent emboss | No emboss observed | Dramatic smearing |
| Embossing Temperature 190-200°C | Good Emboss with start of creasing | No emboss observed | Dramatic smearing |

## Claims

1. Method for providing a thermoset coating layer with a surface pattern and/or texture, which comprises the steps of:
- providing a metal substrate;
- providing a pre-treatment primer or a pre-treatment layer and a primer on the metal substrate;
- applying a layer of a thermoplastic material on the pre-treatment primer or primer,
- applying a top coat comprising a thermosetting material on the thermoplastic layer and curing the thermosetting material, and
- subjecting the coated metal substrate to a treatment for providing the top coat with a surface pattern and/or texture, wherein the top coat is provided with a surface pattern and/or texture at a temperature of the coated metal substrate above the onset softening temperature of the thermoplastic material, wherein the onset softening temperature is determined according to the method disclosed in the description.

2. Method according to claim 1, wherein the temperature of the coated metal substrate is between 10 °C and 70 °C above the onset softening temperature of the thermoplastic material.

3. Method according to claim 1 or 2, wherein the top coat comprises a thermoplastic material.

4. Method according to any one of the preceding claims, wherein the top coat comprises two or more layers.

5. Method according to any one of the preceding claims, wherein the thermosetting material is cured at a temperature between 20°C and 80°C above the onset softening temperature of the thermoplastic material.

6. Method according to any one of the preceding claims, wherein the treatment for providing the top coat with a surface pattern and/or texture is a mechanical treatment, preferably embossing.

7. Method according to any one of the preceding claims, wherein the thermoplastic material comprises plastisols, organosols, polyolefins or ionomers.

8. Method according to any one of the preceding claims, wherein the thermosetting material comprises polyurethanes, polyesters, polyimides, epoxies or fluoroethylene vinyl ethers.

9. Method according to any one of the preceding claims, wherein the dry film thickness of the primer or pre-treatment primer is less than 25 µm, preferably between 5 and 15 µm.

10. Method according to any one of the preceding claims, wherein the dry film thickness of the thermoplastic layer is between 50 and 250 µm, preferably between 150 and 220 µm.

11. Method according to any one of the preceding claims, wherein the dry film thickness of the top coat is between 10 and 60 µm, preferably between 20 and 30 µm.

12. Method according to any one of the preceding claims, wherein the metal substrate comprises aluminium, stainless steel or steel, preferably the steel substrate is provided with a zinc or zinc alloy coating.

13. Method according to any one of the preceding claims, wherein the coated metal substrate is produced by coil coating in a coil coating line, preferably the coil coating line has a speed between 50 and 250 m/min.

14. Coated metal substrate comprising
- a metal substrate;
- a pre-treatment primer or pre-treatment layer and a primer on the metal substrate;
- a thermoplastic layer provided on the pre-treatment primer or primer, and
- a top coat comprising a thermoset material, wherein the top coat comprises a surface pattern and/or texture.

## Patentansprüche

1. Verfahren zum Bereitstellen einer duroplastischen Beschichtungsschicht mit einem Oberflächenmuster und/oder einer -textur, das die folgenden Schritte umfasst:
- Bereitstellen eines Metallsubstrats;
- Bereitstellen eines Vorbehandlungsprimers oder einer Vorbehandlungsschicht und eines Primers auf dem Metallsubstrat;
- Aufbringen einer Schicht eines thermoplastischen Materials auf den Vorbehandlungsprimer oder Primer,
- Aufbringen einer Deckschicht, die ein duroplastisches Material umfasst, auf die thermoplastische Schicht und Härten des duroplastischen Materials; und
- Unterziehen des beschichteten Metallsubstrats einer Behandlung zum Versehen der Deckschicht mit einem Oberflächenmuster und/oder einer -textur, wobei die Deckschicht mit einem Oberflächenmuster und/oder einer -textur bei einer Temperatur des beschichteten Metallsubstrats oberhalb der Anfangserweichungstemperatur des thermoplastischen Materials versehen wird, wobei die Anfangserweichungstemperatur gemäß dem in der Beschreibung offenbarten Verfahren ermittelt wird.

2. Verfahren nach Anspruch 1, wobei die Temperatur des beschichteten Metallsubstrats zwischen 10 °C und 70 °C über der Anfangserweichungstemperatur des thermoplastischen Materials liegt.

3. Verfahren nach Anspruch 1 oder 2, wobei die Deckschicht ein thermoplastisches Material umfasst.

4. Verfahren nach einem der vorstehenden Ansprüche, wobei die Deckschicht zwei oder mehr Lagen umfasst.

5. Verfahren nach einem der vorstehenden Ansprüche, wobei das duroplastische Material bei einer Temperatur zwischen 20 °C und 80 °C über der Anfangserweichungstemperatur des thermoplastischen Materials gehärtet wird.

6. Verfahren nach einem der vorstehenden Ansprüche, wobei die Behandlung zum Versehen der Deckschicht mit einem Oberflächenmuster und/oder einer -textur eine mechanische Behandlung ist, vorzugsweise Prägen.

7. Verfahren nach einem der vorstehenden Ansprüche, wobei das thermoplastische Material Plastisole, Organosole, Polyolefine oder Ionomere umfasst.

8. Verfahren nach einem der vorstehenden Ansprüche, wobei das duroplastische Material Polyurethane, Polyester, Polyimide, Epoxide oder Fluorethylenvinylether umfasst.

9. Verfahren nach einem der vorstehenden Ansprüche, wobei die Trockenfilmdicke des Primers oder des Vorbehandlungsprimers weniger als 25 µm beträgt, vorzugsweise zwischen 5 und 15 µm.

10. Verfahren nach einem der vorstehenden Ansprüche, wobei die Trockenfilmdicke der thermoplastischen Schicht zwischen 50 und 250 µm beträgt, vorzugsweise zwischen 150 und 220 µm.

11. Verfahren nach einem der vorstehenden Ansprüche, wobei die Trockenfilmdicke der Deckschicht zwischen 10 und 60 µm beträgt, vorzugsweise zwischen 20 und 30 µm.

12. Verfahren nach einem der vorstehenden Ansprüche, wobei das Metallsubstrat Aluminium, Edelstahl oder Stahl umfasst, wobei vorzugsweise das Stahlsubstrat mit einer Zink- oder Zinklegierungsbeschichtung versehen ist.

13. Verfahren nach einem der vorstehenden Ansprüche, wobei das beschichtete Metallsubstrat durch Bandbeschichten in einer Bandbeschichtungsanlage hergestellt wird, wobei die Bandbeschichtungsanlage vorzugsweise eine Geschwindigkeit zwischen 50 und 250 m/min aufweist.

14. Beschichtetes Metallsubstrat, umfassend
- ein Metallsubstrat;
- einen Vorbehandlungsprimer oder eine Vorbehandlungsschicht und einen Primer auf dem Metallsubstrat;
- eine thermoplastische Schicht, die auf dem Vorbehandlungsprimer oder dem Primer bereitgestellt ist, und
- eine Deckschicht, die ein duroplastisches Material umfasst, wobei die Deckschicht ein Oberflächenmuster und/oder eine -textur umfasst.

## Revendications

1. Procédé pour fournir une couche de revêtement thermodurcissable avec un motif et/ou une texture de surface, qui comprend les étapes de :
- fourniture d'un substrat métallique ;
- fourniture d'un apprêt de prétraitement ou d'une couche de prétraitement et d'un apprêt sur le substrat métallique ;
- application d'une couche d'un matériau thermoplastique sur l'apprêt de prétraitement ou l'apprêt,
- application d'une couche de finition comprenant un matériau thermodurcissable sur la couche thermoplastique et le durcissement du matériau thermodurcissable, et
- application au substrat métallique d'un traitement pour donner à la couche de finition un motif et/ou une texture de surface, dans lequel la couche de finition reçoit un motif et/ou une texture de surface à une température du substrat métallique revêtu supérieure à la température de ramollissement initial du matériau thermoplastique, la température de ramollissement initial étant déterminée selon le procédé révélé dans la description.

2. Procédé selon la revendication 1, dans lequel la température du substrat métallique revêtu est comprise entre 10 °C et 70 °C au-dessus de la température de ramollissement initial du matériau thermoplastique.

3. Procédé selon la revendication 1 ou 2, dans lequel la couche de finition comprend un matériau thermoplastique.

4. Procédé selon l'une quelconque des revendications précédentes, dans lequel la couche de finition comprend deux couches ou plus.

5. Procédé selon l'une quelconque des revendications précédentes, dans lequel le matériau thermodurcissable est durci à une température comprise entre 20°C et 80°C au-dessus de la température de ramollissement initial du matériau thermoplastique.

6. Procédé selon l'une quelconque des revendications précédentes, dans lequel le traitement pour donner à la couche de finition un motif et/ou une texture de surface est un traitement mécanique, de préférence le gaufrage.

7. Procédé selon l'une quelconque des revendications précédentes, dans lequel le matériau thermoplastique comprend : plastisols, organosols, polyoléfines ou ionomères.

8. Procédé selon l'une quelconque des revendications précédentes, dans lequel le matériau thermodurcissable comprend : polyuréthanes, polyesters, polyimides, résines époxydes ou éthers vinyliques de fluoroéthylène.

9. Procédé selon l'une quelconque des revendications précédentes, dans lequel l'épaisseur du film sec de l'apprêt ou de l'apprêt de prétraitement est inférieure à 25 µm, de préférence entre 5 et 15 µm.

10. Procédé selon l'une quelconque des revendications précédentes, dans lequel l'épaisseur du film sec de la couche thermoplastique est comprise entre 50 et 250 µm, de préférence entre 150 et 220 µm.

11. Procédé selon l'une quelconque des revendications précédentes, dans lequel l'épaisseur de film sec de la couche de finition est comprise entre 10 et 60 µm, de préférence entre 20 et 30 µm.

12. Procédé selon l'une quelconque des revendications précédentes, dans lequel le substrat métallique comprend : aluminium, acier inoxydable ou acier, le substrat d'acier étant de préférence muni d'un revêtement de zinc ou d'alliage de zinc.

13. Procédé selon l'une quelconque des revendications précédentes, dans lequel le substrat métallique revêtu est produit par enduction de bandes en continu dans une chaîne d'enduction de bandes en continu, la chaîne d'enduction de bandes en continu ayant de préférence une vitesse comprise entre 50 et 250 m/min.

14. Substrat métallique revêtu comprenant
- un substrat métallique ;
- un apprêt de prétraitement ou une couche de prétraitement et un apprêt sur le substrat métallique ;
- une couche thermoplastique fournie sur l'apprêt de prétraitement ou l'apprêt, et
- une couche de finition comprenant un matériau thermodurcissable, la couche de finition comprenant un motif et/ou une texture de surface.
